# EUROPÄISCHE PATENTSCHRIFT

(11) **EP 2 436 942 B1**
(45) Veröffentlichungstag und Bekanntmachung des Hinweises auf die Patenterteilung: **17.05.2017**
(21) Anmeldenummer: 11183392.7
(22) Anmeldetag: 30.09.2011
(51) Int. Cl.: F16C 33/10, F16C 32/04

(54) **Wellenlagerung bei Kreiselpumpen**
Shaft bearing for centrifugal pumps
Palier d'arbre dans des pompes centrifuges

(30) Priorität: 30.09.2010 DE 102010047027; 30.09.2011 DE 102011083809
(43) Veröffentlichungstag der Anmeldung: 04.04.2012
(73) Patentinhaber: KSB Aktiengesellschaft, 67227 Frankenthal (DE)
(72) Erfinder: Bosbach, Franz, 67251 Freinsheim (DE)

(56) Entgegenhaltungen:
- EP-A1- 0 694 696
- JP-A- S 599 312
- JP-A- 58 121 397
- JP-A- S59 151 618
- JP-A- 2008 081 673
- US-A- 5 032 751
- US-A- 5 469 008
- HAMAGUCHI H: "Discovery of a new magnetic fluid: bmim[FeCl4] ionic liquid", MAGNETICS CONFERENCE, 2005. INTERMAG ASIA 2005. DIGESTS OF THE IEEE IN TERNATIONAL NAGOYA, JAPAN 4-8 APRIL 2005, PISCATAWAY, NJ, USA,IEEE, US, 4. April 2005 (2005-04-04), Seiten 815-816, XP010840954, DOI: 10.1109/INTMAG.2005.1463836 ISBN: 978-0-7803-9009-6

## Beschreibung

Die Erfindung betrifft eine Kreiselpumpe mit einer Vorrichtung zur Lagerung eines bewegten Bauteils an einem stationären Bauteil, insbesondere zur Wellenlagerung, wobei das bewegte Bauteil und das stationäre Bauteil mittels eines durch eine Magnetanordnung erzeugten Feldes im Abstand zueinander gehalten sind, wobei die Magnetanordnung einen feststehenden Magneten und einen rotierenden Magneten aufweist.

Die DE 23 36 488 A1 offenbart eine Axiallagerung eines aus Elektromotor und Kreiselpumpe bestehenden Kreiselpumpenaggregates. Als Axiallager ist ein aus Magneten und Tragscheibe bestehendes, in der Füllflüssigkeit des Elektromotors arbeitendes Elektromagnetlager und als Not- bzw. Reservelager ein ebenfalls von der Füllflüssigkeit des Elektromotors umgebenes Gleitlager vorgesehen.

Ein solches Magnetlager besitzt unerwünscht hohe Reibungsverluste. Nachteilig beim Einsatz von Ölen als Füllflüssigkeit ist zudem deren Neigung bei einem Temperaturanstieg zu verkoken oder zu verdampfen. Um die Verdampfung auszugleichen sind aufwendige Konstruktionen erforderlich, über die neue Trägerflüssigkeit zugeführt wird.

Aus der US 5,032,751 ist ein mit einem magnetischen Fluid gefülltes Lager bekannt, das eine koaxial zur Längsachse ausgebildeten Bohrung aufweist, durch welche eine Welle geführt ist. In der Bohrung sind ferner mehrere feststehende Magnete angeordnet.

Die JP 2008 081673 A offenbart eine Lageranordnung mit einer Schmierflüssigkeit, die eine homogene, magnetisch ionische Flüssigkeit enthält.

Durch Hamaguchi H. "Discovery of a new magnetic fluid: bmim [FeCl4] ionic liquid" (Magnetics Conference, 2005. Intermag Asia 2005. Digests of the IEEE International Nagoya, Japan 4-8 April 2005, Piscataway, NJ, USA, IEEE, US, 4. April 2005 (2005-04-04), Seiten 815-816, XP010840954, DOI: 10.1109/INTMAG.2005.1463836, ISBN: 978-0-7803-9009-6) ist eine magnetisch ionische Flüssigkeit bekannt.

Die JP S59 9312 A und die JP S59 151618 A zeigen Magnetlageranordnungen mit magnetischen Flüssigkeiten.

Die US 5 469 008 A offenbart einen Motor mit einem mit einem Magnetfluid geschmierten Lager.

Die EP 0 694 696 A1 zeigt eine Kreiselpumpe mit einer Vorrichtung zur Erzeugung eines Axialschubes auf deren Rotorwelle.

Aufgabe der Erfindung ist es, eine Kreiselpumpe mit einer Vorrichtung zur Lagerung anzugeben, bei der es nicht zu einem Verdampfen der Trägerflüssigkeit kommt und durch die auch bei sehr hohen Drehgeschwindigkeiten eine hohe Lebensdauer gewährleistet ist.

Diese Aufgabe wird erfindungsgemäß dadurch gelöst, dass in einem Bereich zwischen dem bewegten und dem stationären Teil ein Fluid angeordnet ist, das sich zumindest teilweise aus einer ionischen Flüssigkeit zusammensetzt. Erfindungsgemäß ist das Fluid, das sich zumindest teilweise aus einer ionischen Flüssigkeit zusammensetzt, zwischen dem rotierenden Magneten und dem feststehenden Magneten angeordnet.

Erfindungsgemäß wird ein Fluid eingesetzt, das sich zumindest teilweise aus einer ionischen Flüssigkeit zusammensetzt. Ionische Flüssigkeiten enthalten ausschließlich lonen. Es sind somit flüssige Salze, ohne dass das Salz in einem Lösungsmittel wie Wasser gelöst ist. Früher waren Salzschmelzen, bei Kochsalz mit einer Schmelztemperatur von über 800 °C, die einzigen bekannten Beispiele für derartige Flüssigkeiten. Heute sind ionische Flüssigkeiten als Salze definiert, die bei Temperaturen unter 100 °C flüssig sind.

Eigenschaften der ionischen Flüssigkeiten sind thermische Stabilität, geringe Entzündlichkeit und vernachlässigbar kleiner Dampfdruck. Durch Modifikation der Ionen ist die Löslichkeit in Wasser oder organischen Lösungsmitteln weitgehend frei bestimmbar. Durch geeigneten Aufbau der Ionen sind flüssigkristalline Eigenschaften einstellbar, was zu besonders guten Schmiereigenschaften führt. Dies macht zusätzliche Not- bzw. Reservelager überflüssig.

Der Einsatz von ionischen Flüssigkeiten zeichnet sich dadurch aus, dass aufgrund der Flüssigkristalleigenschaften der ionischen Flüssigkeit nur geringe Reibungseffekte auftreten und somit der Wirkungsgrad gegenüber dem Einsatz von herkömmlichen Sperrflüssigkeiten gesteigert wird. Zudem sind die erfindungsmäßen Fluide thermisch stabil, so dass es auch bei hohen Temperaturen nicht zur Verkokung oder Verdampfung kommt.

Das eingesetzte Fluid kann sich vollständig aus einer ionischen Flüssigkeit zusammensetzen. Es ist auch möglich, dass mehrere ionische Flüssigkeiten das Fluid bilden. Aus Kostengründen kann es unter Umständen auch vorteilhaft sein, dass nur ein Teil des Fluids aus einer ionischen Flüssigkeit besteht und sich der restliche Anteil aus einer anderen Flüssigkeit, beispielsweise einem Öl, zusammensetzt.

Bei einer besonders vorteilhaften Ausführung der Erfindung weist das Fluid auf Magnetismus ansprechende Komponenten auf. Die Komponenten sind magnetisierbar oder besitzen magnetische Eigenschaften. Zweckmäßigerweise sind die Komponenten superparamagnetisch, paramagnetisch oder ferrimagnetisch. Idealerweise sind die Komponenten ferromagnetisch. Von Vorteil ist es, wenn die Komponenten eine permanente Magnetisierung aufweisen. Durch die magnetischen Komponenten hat das Fluid gegenüber Gasen oder herkömmlichen Füllflüssigkeiten eine signifikant höhere Permeabilität. Dies führt zu einer Verstärkung der elektromagnetischen Wechselwirkungen. Es können dadurch kleinere Magnete verwendet werden, wodurch eine kompaktere Bauweise ermöglicht wird.

Das eingesetzte Fluid ist vorzugsweise nicht mit dem Fördermedium der Pumpe mischbar. Dadurch ist das Fluid beispielsweise als Füllflüssigkeit in hermetisch gekapselten Magnetkupplungspumpen oder Spaltrohrmotorpumpen einsetzbar.

Aufgrund einstellbarer Korrosivität der ionischen Flüssigkeiten kann auf teure, hochkorrosionsfeste Werkstoffe und Trennelemente in dem Bereich der ionischen Flüssigkeiten verzichtet werden.

Die magnetischen Komponenten können in unterschiedlicher Form in der ionischen Flüssigkeit vorliegen. Eine Möglichkeit besteht darin, dass die Komponenten als Partikel vorliegen, die in der ionischen Flüssigkeit suspendiert sind. Die Partikelgröße liegt im Nanobereich, vorzugsweise zwischen 1 und 100 nm, wobei sich insbesondere Partikelgrößen im Bereich von 10 nm als günstig erweisen. Sie bestehen aus magnetischen Stoffen wie Magnetit, Ferrit, Mangan, Nickel, Kobalt oder speziellen Legierungen. Die ionische Flüssigkeit fungiert als Trägerflüssigkeit für die magnetischen Partikel. Zusätzlich kann eine oberflächenaktive Substanz, wie beispielsweise Ölsäure, beigefügt werden, die als monomolekulare Schicht an der Oberfläche der Partikel haftet. Die Radikale polarer Moleküle der oberflächenaktiven Substanz stoßen sich gegenseitig ab und verhindern damit ein Verklumpen der Partikel.

Bei einer besonders vorteilhaften Ausführung der Erfindung sind die magnetischen Komponenten Ionen der ionischen Flüssigkeiten. In diesem Fall ist keine zusätzliche Trägerflüssigkeit erforderlich, da die magnetischen Komponenten selbst Teil der ionischen Flüssigkeit sind. Aufgrund der Ladungseigenschaft von Ionen stoßen sich Komponenten gleicher Ladung automatisch ab, so dass ein Verklumpen verhindert wird, ohne dass zusätzliche Substanzen zugeführt werden müssen. Da die magnetischen Ionen Teil der ionischen Flüssigkeit sind, wird eine Entmischung ausgeschlossen und somit eine hohe Lebensdauer des Fluids gewährleistet.

Sind die magnetischen Komponenten positiv geladen, sind sie Kationen der ionischen Flüssigkeit. Dabei kann auch nur ein Teil der Kationen der ionischen Flüssigkeit aus magnetischen Komponenten bestehen, während die restlichen Kationen keine magnetischen Eigenschaften besitzen. Um einen starken Einfluss des Magnetfeldes zu gewährleisten, erweist es sich als günstig, wenn sämtliche Kationen der ionischen Flüssigkeit magnetisch sind.

Auch die Anionen der ionischen Flüssigkeit können magnetische Komponenten sein. Auch in diesem Fall ist es möglich, dass nur ein Teil der Anionen magnetisch sind, wobei der Einfluss des Magnetfeldes besonders stark ist, wenn sämtliche Anionen der ionischen Flüssigkeit magnetische Eigenschaften besitzen.

Bei einer besonders vorteilhaften Variante der Erfindung sind sowohl die Anionen als auch die Kationen der ionischen Flüssigkeit magnetisch.

Magnetkräfte, die elektrostatische Anziehung zwischen den Ionen und zudem die Unlöslichkeit im Medium stellen drei Faktoren zur Sicherheit gegen ein Austragen des Magnetfluides dar. Sollte es dennoch bei Fehlbelastungen durch Druckschwankungen oder Missbrauch zu einer Leckage des Magnetfluides kommen, kann dieses durch geeignete Sammeleinrichtungen mit Magnetanordnung wie Magnetabscheider gesammelt und der Lagerung wieder zugeführt werden.

Weitere Merkmale und Vorteile der Erfindung ergeben sich aus der Beschreibung von Ausführungsbeispielen anhand von Zeichnungen und aus den Zeichnungen selbst. Dabei zeigt
- Fig. 1: eine als Magnetlager ausgeführte Wellenlagerung einer Kreiselpumpe (nicht erfindungsgemäß),
- Fig. 2: ein Kreiselpumpenaggregat mit einer als Magnetlager ausgeführten Wellenlagerung.

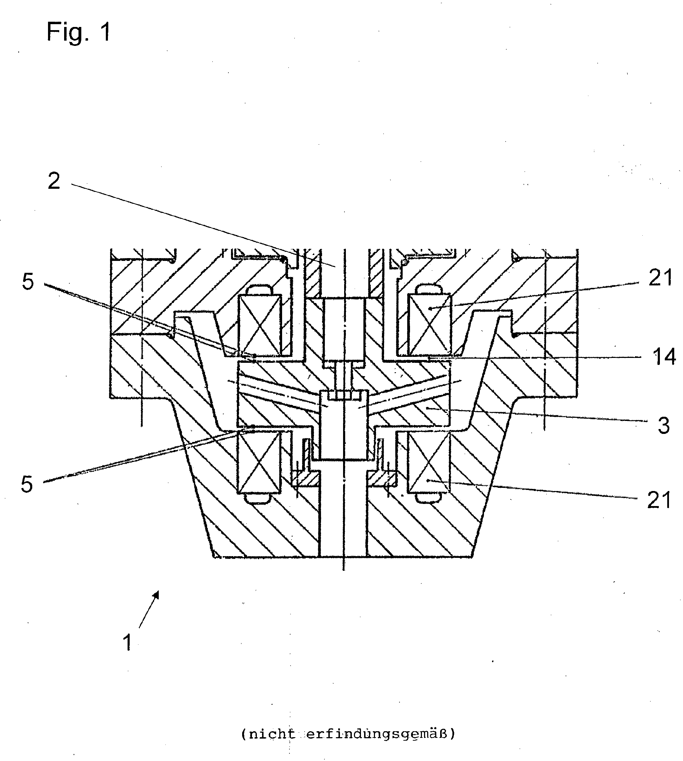

In Fig. 1 ist das Motorgehäuse 1 einer Kreiselpumpe gezeigt. Darin sind Magnete 21, Elektromagnete oder Permanentmagnete, angeordnet, die mit einer auf einer Welle 2 der Kreiselpumpe vorgesehenen Tragscheibe 3 zusammenwirken. Die Magnete 21 erzeugen ein magnetisches Feld, von dem die von den Laufrädern der Pumpe ausgehenden Axialkräfte aufgenommen werden. Die einander zugekehrten Flächen der Magnete 21 und der Tragscheibe 3 sind hier zusätzliche als Gleitflächen 5 ausgebildet. In einem Bereich zwischen dem bewegten und dem stationären Teil der Lagerung, die durch das magnetische Feld der Magnete 21 im Abstand zueinander gehalten sind, ist ein Fluid 14 angeordnet, das sich zumindest teilweise aus einer ionischen Flüssigkeit zusammensetzt. Aufgrund der Flüssigkristalleigenschaften der ionischen Flüssigkeit treten nur geringe Reibungseffekte auf und der Wirkungsgrad gegenüber dem Einsatz einer herkömmlichen Füllflüssigkeit ist gesteigert. Zudem ist das Fluid 14 thermisch stabil, so dass es auch bei hohen Temperaturen nicht zur Verkokung oder Verdampfung kommt. Somit ist eine auch unter extremen Betriebsbedingungen berührungs- und verschleißfreie Fixierung der Welle 2 der Kreiselpumpe gewährleistet. Auf den Einsatz zusätzlicher Not- bzw. Reservelager kann verzichtet werden.

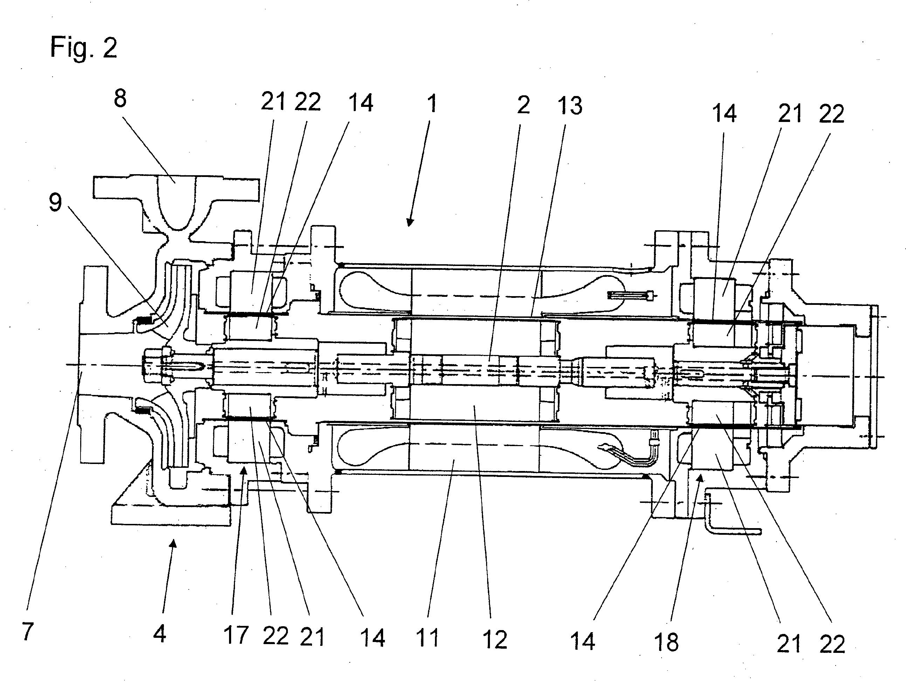

Fig. 2 zeigt ein Kreiselpumpenaggregat in Form einer Spaltrohrmotorpumpe mit einem Motorgehäuse 1 und einem Kreiselpumpengehäuse 4. Im Motorgehäuse wirkt ein elektrischer Stator 11 mit einem an einer Welle 2 angeordneten elektrischen Rotor 12 zusammen, wodurch die Welle 2 angetrieben wird. Ein Motorraum im Bereich des Stators 11 und ein Motorraum im Bereich des Rotors 12 sind durch ein Spaltrohr 13 voneinander getrennt. An einem pumpenseitigen Ende der Welle 2 ist im Kreiselpumpengehäuse 4 ein Laufrad 9 angeordnet. Durch die Rotation des Laufrades 9 wird ein Fördermedium von einer Saugseite 7 zu einer Druckseite 8 des Kreiselpumpengehäuses 4 gefördert. Zur Lagerung der Welle 2 dienen zwei Magnetanordnungen 17, 18 mit ringförmigen Magneten 21, 22 wobei jeweils ein außen liegender Magnet 21 feststehend mit einem diesen umgebenden Gehäuseteil verbunden ist und ein innen liegender Magnet 22 an der rotierenden Welle 2 angeordnet ist. Die Magnete 21 sind als Elektromagnete, die Magnete 22 als Permanentmagnete ausgebildet. Die Magnete 21, 22 erzeugen ein magnetisches Feld, von dem die vom Laufrad 9 der Pumpe ausgehenden Kräfte aufgenommen werden. Zwischen den rotierenden Magneten 22 und den feststehenden Magneten 21 ist ein Fluid 14 angeordnet, das sich zumindest teilweise aus einer ionischen Flüssigkeit zusammensetzt. Aufgrund der Flüssigkristalleigenschaften der ionischen Flüssigkeit treten nur geringe Reibungseffekte auf und der Wirkungsgrad gegenüber dem Einsatz einer herkömmlichen Füllflüssigkeit ist gesteigert. Zudem ist das Fluid 14 thermisch stabil, so dass es auch bei hohen Temperaturen nicht zur Verkokung oder Verdampfung kommt. Somit ist eine auch unter extremen Betriebsbedingungen berührungs- und verschleißfreie Fixierung der Welle 2 des Kreiselpumpenaggregats gewährleistet. Auf den Einsatz zusätzlicher Not- bzw. Reservelager kann verzichtet werden. Das eingesetzte Fluid 14 ist nicht mit dem Fördermedium der Kreiselpumpe mischbar und wird optional als Füllflüssigkeit im Bereich zwischen den Magnetanordnungen 17, 18 eingesetzt.

## Patentansprüche

1. Kreiselpumpe mit einer Vorrichtung zur Lagerung eines bewegten Bauteils an einem stationären Bauteil, insbesondere zur Wellenlagerung, wobei das bewegte Bauteil und das stationäre Bauteil mittels eines durch eine Magnetanordnung erzeugten Feldes im Abstand zueinander gehalten sind, wobei die Magnetanordnung einen feststehenden Magneten (21) und einen rotierenden Magneten (22) aufweist,
**dadurch gekennzeichnet, dass**
zwischen dem rotierenden Magneten (22) und dem feststehenden Magneten (21) ein Fluid (14) angeordnet ist, das sich zumindest teilweise aus einer ionischen Flüssigkeit zusammensetzt.

2. Kreiselpumpe nach Anspruch 1, **dadurch gekennzeichnet, dass** das Fluid (14) magnetische Komponenten aufweist.

3. Kreiselpumpe nach Anspruch 1 oder 2, **dadurch gekennzeichnet, dass** zumindest ein Teil der Ionen der ionischen Flüssigkeit magnetische Komponenten sind.

4. Kreiselpumpe nach Anspruch 3, **dadurch gekennzeichnet, dass** zumindest ein Teil der Anionen der ionischen Flüssigkeit magnetische Komponenten sind.

5. Kreiselpumpe nach Anspruch 3, **dadurch gekennzeichnet, dass** zumindest ein Teil der Kationen der ionischen Flüssigkeit magnetische Komponenten sind.

6. Kreiselpumpe nach einem der Ansprüche 1 bis 5, **dadurch gekennzeichnet, dass** zumindest ein Teil der magnetischen Komponenten Partikel sind, die in der ionischen Flüssigkeit suspendiert sind.

7. Kreiselpumpe nach einem der Ansprüche 1 bis 6, **dadurch gekennzeichnet, dass** die ionische Flüssigkeit nicht mischbar mit die Vorrichtung umgebenden Fluiden ist.

8. Kreiselpumpe nach einem der Ansprüche 1 bis 7, **dadurch gekennzeichnet, dass** die ionische Flüssigkeit Flüssigkristalleigenschaften aufweist.

9. Kreiselpumpe nach einem der Ansprüche 1 bis 8, **dadurch gekennzeichnet, dass** ausgetragenes Fluid (14) über eine Abscheidevorrichtung gesammelt wird.

10. Kreiselpumpe nach Anspruch 9, **dadurch gekennzeichnet, dass** die Abscheidevorrichtung mit einer Magnetanordnung das Fluid (14) sammelt.

11. Kreiselpumpe nach Anspruch 9 oder 10, **dadurch gekennzeichnet, dass** das abgeschiedene Fluid (14) der Lagervorrichtung wieder zugeführt wird.

## Claims

1. Centrifugal pump having a device for mounting a moving component on a stationary component, in particular for shaft mounting, the moving component and the stationary component being held at a distance from one another by means of a field generated by a magnet arrangement, the magnet arrangement having a stationary magnet (21) and a rotating magnet (22),
**characterized in that**
a fluid (14) which is at least partly composed of an ionic liquid is arranged between the rotating magnet (22) and the stationary magnet (21).

2. Centrifugal pump according to Claim 1, **characterized in that** the fluid (14) has magnetic components.

3. Centrifugal pump according to Claim 1 or 2, **characterized in that** at least some of the ions of the ionic liquid are magnetic components.

4. Centrifugal pump according to Claim 3, **characterized in that** at least some of the anions of the ionic liquid are magnetic components.

5. Centrifugal pump according to Claim 3, **characterized in that** at least some of the cations of the ionic liquid are magnetic components.

6. Centrifugal pump according to one of Claims 1 to 5, **characterized in that** at least some of the magnetic components are particles which are suspended in the ionic liquid.

7. Centrifugal pump according to one of Claims 1 to 6, **characterized in that** the ionic liquid is not miscible with fluids surrounding the device.

8. Centrifugal pump according to one of Claims 1 to 7, **characterized in that** the ionic liquid has liquid crystal properties.

9. Centrifugal pump according to one of Claims 1 to 8, **characterized in that** fluid (14) that is discharged is collected via a separating device.

10. Centrifugal pump according to Claim 9, **characterized in that** the separating device collects the fluid (14) with a magnet arrangement.

11. Centrifugal pump according to Claim 9 or 10, **characterized in that** the liquid (14) that is discharged is fed to the bearing device again.

## Revendications

1. Pompe centrifuge avec un dispositif destiné au logement d'un élément structurel en mouvement au niveau d'un élément structurel stationnaire, en particulier destiné à un palier d'arbre, selon laquelle l'élément structurel en mouvement et l'élément structurel stationnaire sont maintenus à distance l'un de l'autre au moyen d'un champ généré par un assemblage d'aimants, selon laquelle l'assemblage d'aimants présente un aimant (21) immobile et un aimant (22) en rotation,
**caractérisée en ce que**
un fluide (14) est disposé entre l'aimant (22) en rotation et l'aimant (21) immobile, lequel fluide (14) se compose, tout au moins en partie, d'un liquide ionique.

2. Pompe centrifuge selon la revendication 1, **caractérisée en ce que** le fluide (14) présente des composants magnétiques.

3. Pompe centrifuge selon la revendication 1 ou 2, **caractérisée en ce que** tout au moins une partie des ions du liquide ionique sont des composants magnétiques.

4. Pompe centrifuge selon la revendication 3, **caractérisée en ce que** tout au moins une partie des anions du liquide ionique sont des composants magnétiques.

5. Pompe centrifuge selon la revendication 3, **caractérisée en ce que** tout au moins une partie des cations du liquide ionique sont des composants magnétiques.

6. Pompe centrifuge selon l'une des revendications 1 à 5, **caractérisée en ce que** tout au moins une partie des composants magnétiques sont des particules qui sont en suspension dans le liquide ionique.

7. Pompe centrifuge selon l'une des revendications 1 à 6, **caractérisée en ce que** le liquide ionique n'est pas miscible avec des fluides environnant le dispositif.

8. Pompe centrifuge selon l'une des revendications 1 à 7, **caractérisée en ce que** le liquide ionique présente des propriétés cristallines liquides.

9. Pompe centrifuge selon l'une des revendications 1 à 8, **caractérisée en ce que** le fluide (14) transporté est collecté par un dispositif de séparation.

10. Pompe centrifuge selon la revendication 9, **caractérisée en ce que** le dispositif de séparation collecte le fluide (14) par l'intermédiaire d'un assemblage d'aimants.

11. Pompe centrifuge selon la revendication 9 ou 10, **caractérisée en ce que** le fluide (14) séparé est réacheminé vers le dispositif de palier.
